# EUROPÄISCHE PATENTSCHRIFT

(11) **EP 2 865 614 B1**
(45) Veröffentlichungstag und Bekanntmachung des Hinweises auf die Patenterteilung: **28.06.2017**
(21) Anmeldenummer: 13190277.7
(22) Anmeldetag: 25.10.2013
(51) Int. Cl.: B65G 21/06

(54) **Gestell für eine Förderbandanlage**
Frame for a conveyor belt assembly
Bâti pour une installation de tapis de transport

(43) Veröffentlichungstag der Anmeldung: 29.04.2015
(73) Patentinhaber: Mettler-Toledo Garvens GmbH, 31180 Giesen (DE)
(72) Erfinder: Meyer, Mario, 30855 Langenhagen (DE); Preussner, Jan Axel, 31139 Hildesheim (DE); Hamann, Frank, 31180 Giesen (DE); Bettels, Dirk, 31177 Harsum (DE); Kusche, Michael, 31139 Hildesheim (DE)
(74) Vertreter: Mettler-Toledo

(56) Entgegenhaltungen:
- WO-A2-2005/057144
- DE-A1-102007 032 270
- KR-B1- 101 053 716

## Beschreibung

Die Erfindung betrifft ein Gestell für eine Förderbandanlage nach dem Oberbegriff des Anspruchs 1. In vielen automatisierten Produktionsabläufen werden die Produkte, oder andere Gegenstände, mittels Förderbandanlagen transportiert. Zur Qualitätssicherung der Produkte stehen dem Produzenten viele Inspektionssysteme zur Verfügung, wie zum Beispiel Kontrollwaagen, Metalldetektoren, optische Inspektionssysteme, Röntgen-Inspektionssysteme und dergleichen mehr.

In der Herstellung von pharmazeutischen oder kosmetischen Produkten, Lebensmitteln, Getränken sowie in der Logistikindustrie, chemischen Industrie, Automobilzulieferindustrie, und der metallverarbeitenden Industrie sind Kontrollwaagen ein Schlüsselelement der Qualitätssicherung. Sie verbessern nicht nur die Ausschöpfung der vorhandenen Ressourcen sondern helfen auch nationale Verordnungen, Eichvorschriften und Industrienormen zu erfüllen. Ein effektives Kontrollwägesystem bietet Schutz gegen Produktfehler und senkt die Gesamtbetriebskosten.

Eine dynamische Kontrollwaage ist ein System, das Wägegüter verwiegt, während sie innerhalb einer Produktionslinie über die Waage geführt werden, die Wägegüter in vorgegebene Gewichtszonen klassiert und die Wägegüter entsprechend der Gewichtsklassierung sortiert oder ausschleust. Einsatzgebiete von Kontrollwaagen sind vielseitig und umfassen zum Beispiel:
- Prüfung auf Unter- bzw. Übergewicht von Produkten
- Einhaltung der gesetzlichen Bestimmungen für den Nettoinhalt von verpackten Gütern
- Reduzierung von Produktverschwendungen durch Verwendung der mittels der Kontrollwaage gewonnenen Gewichtswerte zur Einstellung der Füllmaschinen
- Klassierung von Produkten nach Gewicht
- Messung und Aufzeichnung der Leistung der Produktionsanlage bzw. Produktionslinie
- Stückzahl-Verifizierung anhand des Gewichts

Mit Kontrollwaagen werden 100% der Produkte einer Produktlinie gewogen. So werden dann auch die gesamten Produktionsdaten gesammelt für Produktzählung, Chargennachverfolgung oder für die Produktionsstatistik.

Ein Kontrollwägesystem besteht üblicherweise aus Zuführband, Wägeband, Abführband mit Sortiereinrichtung und Wägeterminal mit Benutzerschnittstelle. Das zwischen Zu- und Abführband gelegene Wägeband ist auf einer Wägezelle gelagert, welche das Gewicht des Produkts beim Überfahren des Wägebandes dynamisch erfasst. Die zwei am häufigsten verwendeten Wägetechnologien für Kontrollwaagen sind Wägezellen mit Dehnungsmessstreifen (DMS) oder nach dem Prinzip der elektromagnetischen Kraftkompensation (EMFR) arbeitende Wägezellen. Nach ihrem Transport über das Wägeband werden die Produkte von einem dem Wägeband nachgeschalteten Abführband abtransportiert. Durch die dynamische Wägung werden fehlgewichtige Produkte erkannt und von einer Aussortiervorrichtung in der Regel quer zu dem in der Längsrichtung stattfindenden Transport der Produkte ausgestossen.

Ebenso wie Kontrollwaagen gehören auch Metalldetektoren zu den Schlüsselkomponenten für eine effektive Qualitätssicherung. Der Einsatz von Metalldetektoren wird gewerblich für die Suche nach Produktverunreinigungen genutzt, zum Beispiel für Bleikugeln in Fleisch, Drahtteilen in Getreide, Spänen aufgrund von Reparaturen an der Produktionsanlage oder weiteren Verunreinigungen aus der Produktverarbeitung.

Bei einem industriellen Metalldetektionssystem handelt es sich um ein hoch entwickeltes Gerät, mit dem metallische Fremdkörper erkannt und aussortiert werden können. Die Detektierbarkeit schliesst eisenhaltige Metalle, auch Edelstähle und nichteisenhaltige Metalle, wie Messing, Kupfer, Aluminium und Blei, ein. Ein typisches Metalldetektionssystem weist mindestens folgende vier Hauptkomponenten auf: Suchkopf, Transportsystem, Bedieneinheit und ein automatisches Ausschleussystem. Der Suchkopf besitzt dabei meist mehrere elektromagnetische Spulen, welche jeweils zur Erzeugung oder Detektion hochfrequenter elektromagnetischer Felder dienen.

Damit der Metalldetektor nicht von elektrischen Signalen nahe gelegener metallischer Komponenten oder Maschinen gestört wird, ist der Suchkopf in einem Metallgehäuse, in der Regel aus Stahl oder Aluminium, abgeschirmt untergebracht. Das Metallgehäuse dient zudem der Verbesserung der Festigkeit und Starrheit und hat somit einen wesentlichen Anteil an der Detektionsleistung des gesamten Metalldetektors. Die zu untersuchenden Produkte werden bei einer Vielzahl von Metalldetektoren durch eine Öffnung im Metallgehäuse durch die Spulen des Metalldetektors hindurchgeführt.

Trotz Abschirmung mittels eines Metallgehäuses tritt ein Teil des hochfrequenten Magnetfeldes durch die Metalldetektoröffnung nach aussen und kann die Leistung des Metalldetektors beeinträchtigen, wenn dieses Magnetfeld dann von Metallgegenständen gestört wird. Um eine optimale Metalldetektion zu erzielen, dürfen sich in einem bestimmten Bereich um die Metalldetektoröffnung keine Metallgegenstände befinden. Dieser Bereich wird als metallfreie Zone MFZ bezeichnet. Für eine zuverlässige Detektion der Produkte sollte dieser Umstand berücksichtigt werden.

Optische Inspektionssysteme können Produkte mit fehlerhaftem Erscheinungsbild während des Transportes dynamisch erkennen. Sie erfassen mit Kameras und/oder Scannern ein Produkt als Ganzes und vergleichen die gewonnenen Bilder anhand eines Referenzbildes (Bitmapvergleich) und/oder anhand von CAD-Daten (Vektorvergleich). Weist ein Produkt zum Beispiel Beschädigungen beziehungsweise Unförmigkeiten der Verpackung und/oder schräg aufgebrachte Etiketten auf kann es daraufhin dem Inspektionssystem nachfolgend aussortiert werden. Ein solches Inspektionssystem wird seitlich und/oder oberhalb des Transportbandes angebracht und kann durch ein umgebendes Gehäuse vor Störeinflüssen, wie zum Beispiel wechselnden Lichtverhältnissen, abgeschirmt werden.

Aus DE 103 57 982 A1 ist ein Gestell für eine Kontrollwaage bekannt, mit einem sich in der Längsrichtung erstreckenden und als tragendes Element bestimmten Längsteil des Gestells. Dieses kann derart biegesteif und torsionssteif ausgelegt werden, dass die für den jeweiligen Anwendungsfall erforderliche Stabilität erzielt wird. An beiden Enden des Längsteils sind flache, plattenartige Querteile angebracht, welche der Abstützung des Gestells auf dem Boden dienen. Durch die Ausgestaltung des Längsteils als Rohr entfällt im Wesentlichen das Risiko von auf waagrechten Oberflächenbereichen des Gestells liegenbleibenden Verschmutzungen. Insbesondere bleiben keine Flüssigkeiten liegen, sondern laufen zum Boden hin ab. Jedoch ist durch das Längsteil ein grosser Materialaufwand nötig, welcher ebenfalls das Gesamtgewicht des Gestells erhöht. Zudem ist eine modulare Verlängerung des Gestells nicht ohne grösseren Aufwand zu erreichen.

In der WO 2011/064088 A1 wird eine Wäge-Fördervorrichtung vorgeschlagen, welche Aufstellelemente aus einem Plattenmaterial umfasst und Querstreben, welche die benachbarten Aufstellelemente verbinden, wobei die Wäge-Fördereinrichtung an den Aufstellelementen gehalten wird. Die Aufstellelemente weisen jeweils einen Fussbereich auf, über den sie auf einer Unterlage aufgestellt sind und einen Haltebereich, an welchem die Wäge-Fördereinrichtung seitlich gehalten wird. Durch das seitliche Halten der Wäge-Fördereinrichtung wird ein Moment in die Aufstellelemente eingeleitet, welches zu einer Rotation um eine in Beförderungsrichtung parallel verlaufende Achse führt. Beim Zu- und Abführen der Wäge- bzw. Kontrollgüter kann die Wäge-Fördereinrichtung deshalb zu Schwingungen angeregt werden, was wiederum schlechte Bedingungen für die in der Wäge-Fördereinrichtung verwendete Kontrollwage schafft. Die KR 101 053 716 B1 offenbart ein Gestell für eine Förderbandanlage nach dem Oberbegriff des Anspruchs 1.

Weitere aus dem Stand der Technik bekannte Gestelle stellen aufwendige Schweißkonstruktionen aus sich in der Längsrichtung und quer dazu erstreckenden Metallstreben dar. Sie sind hinsichtlich der für die Schwingungsunterdrückung notwendigen Stabilität verbesserungsbedürftig. Ferner sind sie gegen Verschmutzungen anfällig und schwer zu reinigen. Ebenso sind diese Gestelle nicht in einfacher Art und Weise ausbaufähig, bzw. erweiterbar.

Der Erfindung liegt die Aufgabe zugrunde, ein Gestell der eingangs genannten Art zu schaffen, das einen verringerten baulichen Aufwand erfordert und gleichzeitig eine hohe Stabilität aufweist, wenig verschmutzungsanfällig und leicht zu reinigen ist. Weiter soll durch die Erfindung ein Gestell geschaffen werden, an welchem die Befestigung von Komponenten und Zusatzausrüstung einfach und schnell vorgenommen werden kann.

Zudem soll es möglich sein, das Gestell in modularer Bauweise aufzubauen d.h. mit standardisierten Einzelbauteilen und/oder Teilegruppen soll das Gestell spezifisch an den Betriebsort und an die zu tragenden Komponenten angepasst werden können.

Die Aufgaben werden erfindungsgemäss mit den Merkmalen gemäss Anspruch 1 gelöst.

Das Gestell für eine Förderbandanlage, welche ein in einer Längsrichtung umlaufendes Förderband aufweist, zum Abstützen einer für den Betrieb aufgestellten Förderbandanlage auf dem Untergrund, weist mindestens zwei Tragelemente aus einem Plattenmaterial auf, deren Hauptebenen sich quer zur Längsrichtung erstrecken, wobei ein Tragelement einen am oberen Ende angeordneten Auflagebereich aufweist. Weiter weist das Gestell mindestens zwei Distanzelemente, welche jeweils parallel zur Längsrichtung angeordnet sind und dabei einen Abstand der mindestens zwei Tragelemente bestimmten, mindestens ein Abstützelement mit mindestens einem dem Untergrund zugewandten Maschinenfuss, über welchen sich das Gestell auf dem Untergrund abstützt, auf, wobei das mindestens eine Abstützelement mit einem Distanzelement verbunden ist. Weiter weist das Gestell zusätzlich mindestens zwei erste mechanische Schnittstellenelemente auf, welche parallel zu den Distanzelementen verlaufen, sich vorzugsweise über mindestens zwei Tragelemente erstrecken und dabei auf den Auflagebereichen der mindestens zwei Tragelemente aufliegend fixiert sind, wobei der Auflagebereich weitgehend horizontal ausgerichtet ist. Zusätzlich weist das Gestell mindestens zwei Fixierelemente auf, mittels welcher die ersten mechanischen Schnittstellenelemente an den Auflagebereichen fixierbar sind.

Erfindungsgemäss sind die mindestens zwei Distanzelemente jeweils zwischen den mindestens zwei Tragelementen angeordnet und das Gestell ist derart ausgestaltet, dass die Dimensionen in den zwei Richtungen der Hauptebenen der mindestens zwei Tragelemente die Breite und die Installationshöhe des Gestells bestimmen.

Durch die Aufbauweise des erfinderischen Gestells kann dieses an die Einbausituation in Bezug auf die zu überbrückende Förderlänge, sowie an die Benutzeranforderungen hinsichtlich Breite und Installationshöhe des Förderbandes angepasst werden. Die Breite und Installationshöhe werden durch die mindestens zwei Tragelemente bestimmt und um das Gestell an die Förderlänge anzupassen, werden die Distanzelemente entsprechend angepasst. Diese modulare Aufbauweise erlaubt ein stark verkleinertes Teilesortiment sowie eine kürzere Montagezeit bei zugleich hoher Flexibilität an Einbau- und Benutzeranforderungen. Zudem sind, dank der modularen Aufbauweise, spätere Anpassungen der Anlage auf Grund veränderter Kundenanforderungen möglich und einfacher zu realisieren.

Die Ausgestaltung der Tragelemente aus einem Plattenmaterial bewirkt, dass der Anteil an waagrechten Flächen, auf denen sich Schmutz und Reinigungswasser ansammeln könnte, auf ein Minimum gesetzt wird. Somit eignet sich das Gestell auch für die Anwendung in Hygiene- und/oder Food-Bereichen.

Als Längsrichtung des Gestells wird die Richtung definiert, in welcher das Förderband die Förderbandanlage auf der Transportseite umläuft. Nach Definition ist die Längsrichtung gleichgesetzt mit der Förderrichtung der Förderbandanlage. Oben bzw. unten beziehen sich auf eine für den Betrieb aufgestellte Förderbandanlage und Vorne ist jene Region des Gestells, wo ein Gegenstand auf das Förderband der Förderbandanlage gelangt. Dementsprechend ist Hinten, wo der Gegenstand das Förderband verlässt.

Die Hauptebene der Tragelemente ist jene Ebene deren Flächennormale parallel zur Längsrichtung verläuft.

Ein solches Gestell findet zum Beispiel in Anlagen für Produktüberprüfungen Anwendung. Die Erfindung eignet sich sowohl für die Aufnahme einer Förderbandanlage allein als auch in Kombination mit einem Inspektionssystem, sowie mit zur Anlage gehörende Zusatzkomponenten, wie z.B. Lichtschranken, seitliche Führungen für das Transportgut, (Code-) Lesegeräte, leichte Aussortiervorrichtungen (Blasdüsen) oder dergleichen Weitere.

Eine Weiterbildung der Erfindung sieht vor, dass mittels weiterer Tragelemente, Distanzelemente und Fixierelemente das Gestell in und gegen seine Längsrichtung verlängerbar ist, wobei die ersten mechanischen Schnittstellenelemente über die Auflagestellen des Auflagebereiches der Tragelemente verlängerbar sind. Ist die überbrückbare Förderlänge zu lang, so dass die Stabilität mit langen Verbindungselementen nicht mehr gewährleistet werden kann, kann ein zusätzliches Tragelement mit Abstützelementen die Stabilität wieder verbessern.

Eine andere Weiterbildung der Erfindung sieht vor, dass mindestens zwei Tragelemente im unteren Bereich einen Vorsatz mit einer ebenen Fläche aufweisen auf welchem ein Schaltschrank abstützbar ist.

Eine vorteilhafte Weiterbildung der Erfindung sieht vor, dass durch Verwendung von unterschiedlich langen Distanzelementen zwischen jeweils zwei Tragelementen der Abstand von Tragelement zu Tragelement flexibel an die für das Gestell geltenden Einbaubedingungen anpassbar ist. Erfindungsgemäss ist zudem durch Anpassung der Dimensionen der Tragelemente in Richtungen der Hauptebene die Breite und Höhe des Gestells flexibel an die Breite der Förderbandanlage sowie deren Installationshöhe, anpassbar. Für die Grössenanpassung des Gestells am Einbauort sind somit lediglich an zwei Bauelementen, am Tragelement sowie am Distanzelement, des gesamten Gestells Anpassungen vorzunehmen. Die so geschaffene modulare Bauweise verringert das Bauelementsortiment und senkt somit auch die Produktionskosten.

Eine Ausgestaltung der Erfindung sieht vor, dass die mindestens zwei ersten mechanischen Schnittstellenelemente unterbrechungsfrei über die gesamte Länge des Gestells verlaufen. Dies erhöht die Stabilität hinsichtlich Durchbiegung und Torsion in Längsrichtung zusätzlich.

Eine weitere Ausgestaltung der Erfindung sieht vor, dass das Gestell zusätzlich mindestens ein zweites mechanisches Schnittstellenelement aufweist, welches parallel zu den ersten mechanischen Schnittstellenelementen verläuft und vom Auflagebereich der Tragelemente nach oben beabstandet angeordnet ist. Mit dieser Ausgestaltung wird erreicht, dass angebaute Komponenten am Gestell nicht nur optisch getrennt sondern auch gegenseitig vor Vibrationen geschützt sind. Ein zweites mechanisches Schnittstellenelement kann entweder in Längsrichtung links oder rechts, oder auf beiden Seiten der Förderanlage angeordnet sein, je nachdem wo Zusatzausrüstungen für die Förderbandanlage angebracht werden sollen.

Eine andere vorteilhafte Weiterbildung der Erfindung sieht vor, dass die Fixierelemente, nebst den ersten mechanischen Schnittstellenelementen an die Auflagebereiche der Tragelemente, auch die zweiten mechanischen Schnittstellenelemente in einem Abstand zum Auflagebereich der Tragelemente fixieren. So werden gleich zwei Aufgaben durch ein Bauelement erfüllt und das Gestell beinhaltet wiederum weniger Bauelemente.

Eine vorteilhafte Ausgestaltung der Erfindung sieht vor, dass das zweite mechanische Schnittstellenelement unterbrechungsfrei über die gesamte Länge des Gestells verläuft. Dies erhöht die Stabilität hinsichtlich Durchbiegung und Torsion in Längsrichtung noch einmal zusätzlich.

Eine weitere vorteilhafte Weiterbildung der Erfindung sieht vor, dass die mindestens zwei ersten mechanischen Schnittstellenelemente und das mindestens eine zweite mechanische Schnittstellenelement als Rundprofile ausgestaltet sind. Runde Oberflächen haben den Vorteil, dass nach einer Reinigung des Gestells das Wasser auf diesen Oberflächen nicht liegen bleibt sondern abläuft. Das Gestell kann so auch für eine Anwendung in Hygiene- und/oder Food-Bereichen eingesetzt werden.

Eine andere Ausgestaltung der Erfindung sieht vor, dass an den mindestens zwei ersten mechanischen Schnittstellenelementen eine Förderbandanlage und/oder ein Metalldetektionssystem zur Erkennung von Metallverunreinigungen in einem auf dem Förderband geförderten Produkt und/oder eine Kontrollwaage zum Verwiegen eines auf dem Förderband geförderten Produkt und/oder ein optisches Inspektionssystem zur Erkennung eines fehlerhaften Erscheinungsbild eines auf dem Förderband geförderten Produkts anbringbar sind/ist.

Weiter sind an dem mindestens einen zweiten mechanischen Schnittstellenelement Zusatzausrüstungen der Förderbandanlage anbringbar. Zusatzausrüstungen können zum Beispiel Lichtschranken, seitliche Führungen für das Transportgut, Lesegeräte, leichte Aussortiervorrichtungen (Blasdüsen) oder weitere Ausrüstungen sein.

Eine bevorzugte Ausführungsform der Erfindung zeichnet sich dadurch aus, dass das Gestell zusätzlich ein Verbindungselement aufweist, welches auf den Auflageflächen zweier Tragelemente fixiert aufliegt und die zwei Tragelemente so verbindet, dass eine Kontrollwaage daran befestigt werden kann. Eine alternative Befestigungsform einer Kontrollwaage am Gestell ist die Befestigung an einem Verbindungselement. Das Verbindungselement verbindet dabei zwei Tragelemente, vorzugsweise in Längsrichtung ausgerichtet und mittig zu den zwei ersten mechanischen Schnittstellenelementen.

Eine weitere Ausführungsform der Erfindung sieht vor, dass im Freiraum zwischen den Tragelementen ein, mit dem Gestell für die Förderbandanlage nicht in Verbindung stehendes Gestell für eine Kontrollwaage anordnbar ist. Durch die Trennung von Kontrollwaage und Förderband inklusive dessen Komponenten wird verhindert, dass Vibrationen über das Gestell an die Kontrollwaage geleitet werden und die Wägeleistung der Kontrollwaage hinsichtlich Genauigkeit und Reproduzierbarkeit mindern.

Eine weitere Ausgestaltung der Erfindung sieht vor, dass der Auflagebereich des Tragelementes durch eine mit dem Plattenmaterial verbundene Profilstange ausgebildet ist. Dies bietet eine vereinfache Herstellung oder es kann mit engeren Herstellungstoleranzen gearbeitet werden, wodurch sich die Genauigkeit bezüglich der Positionen und Abstände der Auflagestellen erhöhen lässt.

Das erfindungsgemässe Gestell wird bevorzugt für die Abstützung einer Förderbandanlage mit einer Kontrollwaage zum Verwiegen eines auf der Förderbandanlage geförderten Produktes und/oder mit einem Metalldetektionssystem zur Erkennung von Metallverunreinigungen in einem auf dem Förderband geförderten Produkt und/oder mit einem optischen Inspektionssystem zur Erkennung eines fehlerhaften Erscheinungsbild eines auf dem Förderband geförderten Produkt und/oder mit einem Inspektionssystem dergleichen mehr auf dem Untergrund eingesetzt.

Im Folgenden wird der Erfindungsgegenstand anhand von bevorzugten Ausführungsbeispielen, welche in den beiliegenden Zeichnungen dargestellt sind erläutert. Es zeigen:
- Fig. 1: ein zusammengebautes Grundmodul des Gestells ohne Komponenten, in isometrischer Darstellung;
- Fig. 2: eine vergrösserte Darstellung einer Seitenansicht auf ein Fixierelement in Figur 1 aus der Blickrichtung A;
- Fig. 3: ein einzelnes Tragelement in isometrischer Darstellung mit Vorsatz zur Abstützung eines Schaltschrankes;
- Fig. 4: ein einzelnes Tragelement in isometrischer Darstellung ohne Vorsatz;
- Fig. 5: ein zusammengebautes Grundmodul des Gestells mit einer Kontrollwaage und Schaltschrank in isometrischer Darstellung;
- Fig. 6: ein zusammengebautes Grundmodul des Gestells mit einer Kontrollwaage, in seitlicher Darstellung aus Sicht eines Bedieners;
- Fig. 7: ein zusammengebautes Grundmodul des Gestells mit einer Kontrollwaage und einem der Kontrollwaage in Längsrichtung vorgeschalteten Metalldetektionssystem, in isometrischer Darstellung

Merkmale mit gleicher Funktion und ähnlicher Ausgestaltung sind in der folgenden Beschreibung mit denselben Bezugszeichen versehen.

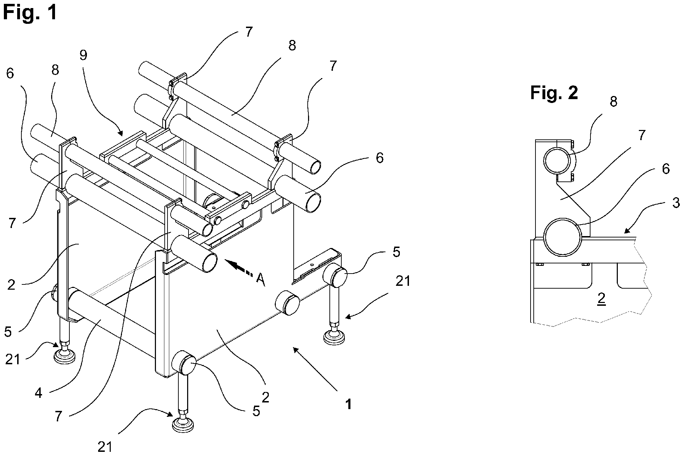

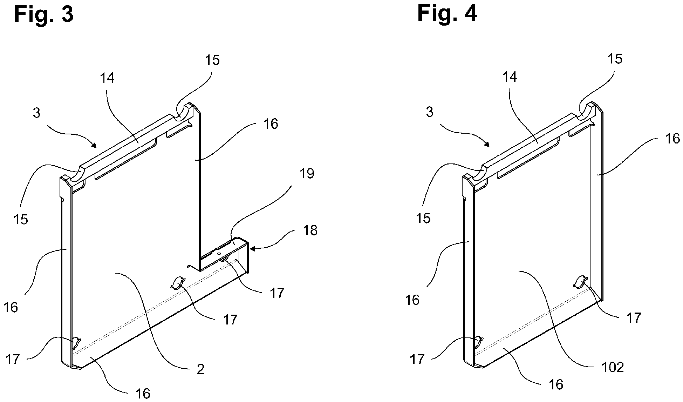

Figur 1 zeigt ein zusammengebautes Grundmodul des Gestells 1, jedoch noch ohne angebaute Komponenten. Durch zwei Distanzelemente 4 werden zwei Tragelemente 2 auf Abstand gehalten. Durch die Abstützelemente 5 werden die Tragelemente 2 an den Distanzelementen 4 gehalten und über die an den Abstützelementen 5 angebrachten Maschinenfüsse 21 ist das Gestell 1 für eine für den Betrieb aufgestellte Förderbandanlage auf dem Untergrund abgestützt. Am oberen Ende der Tragelemente 2 sind zwei erste mechanische Schnittstellenelemente 6 jeweils auf dem Auflagebereich 3 eines Tragelements 2 aufgelegt. Der Auflagebereich 3 kann eigens für die aufzulegenden Elemente speziell vorgeformte Auflagestellen 15 (siehe Figuren 2 und 3) aufweisen, zum Beispiel halbkreisgrosse Ausschnitte um ein erstes mechanisches Schnittstellenelement 6 als Rohrprofil aufzunehmen. Ein Fixierelement 7 in Form eines Bügels befestigt das erste mechanische Schnittstellenelement 6 mit dem Tragelement 2 und erhöht zudem die Gesamtsteifigkeit des Gestells 1. An diesem ersten mechanischen Schnittstellenelement 6 können Komponenten der Förderbandanlage, wie zum Beispiel Förderbänder, Kontrollwaagen, Metalldetektionssysteme und/oder Aussortiervorrichtungen z.B. Druckluftzylinder befestigt werden. Vom Auflagebereich 3 nach oben beabstandet sind zwei zweite mechanische Schnittstellenelemente 8 angeordnet, welche parallel zum ersten mechanischen Schnittstellenelement 6 verlaufen. An diesen zweiten mechanischen Schnittstellenelementen 8 können Zusatzausrüstungen wie zum Beispiel Lichtschranken, seitliche Führungen für das Transportgut, Lesegeräte, leichte Aussortiervorrichtungen (z.B. Blasdüsen, etc.) und dergleichen mehr angebracht werden.

Ein spezielles Fixierelement 7 ist als Seitenansicht aus der in Figur 1 gezeigten Blickrichtung A in Figur 2 vergrössert dargestellt. Das Fixierelement 7 übernimmt hier gleich mehrere Funktionen. Zum einen befestigt es das erste mechanische Schnittstellenelement 6 am Tragelement 2, zum anderen beabstandet das Fixierelement 7 das zweite mechanische Schnittstellenelement 8 am Aufnahmebereich 3 des Tragelements 2 und fixiert dieses zugleich. Natürlich kann das Gestell 1 auch Fixierelemente aufweisen, mittels welcher nur die ersten mechanischen Schnittstellenelemente 6 an den Auflagebereichen 3 fixiert werden. Eine solche vereinfachte Ausführungsform ist in Figur 1 nicht gezeigt. In solchen Fällen wären, bei Vorhandensein von zweiten Schnittstellenelementen, für die Beabstandung der zweiten mechanischen Schnittstellen 8 von der Auflagefläche 3 zusätzliche von den Fixierelementen 7 unterschiedliche Abstandshalter erforderlich.

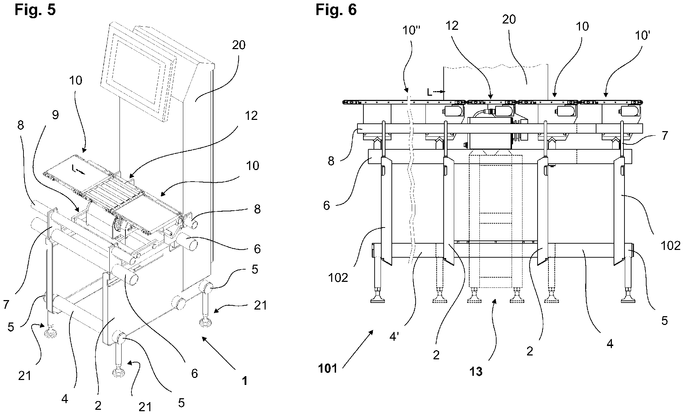

In den Figuren 3 und 4 sind einzelne Tragelemente 2, 102 abgebildet wie sie zum Zusammenbau vorliegend sind. Die Tragelemente 2, 102 sind aus einem Plattenmaterial durch Ausschneiden, Biegen und Schweissen gefertigt. Zur Steifigkeitssteigerung eines einzelnen Tragelements 2, 102 weist das Plattenmaterial an den Konturen Biegelaschen 16 auf. Am oberen Ende befinden sich die Auflageflächen 3 mit je zwei Auflagestellen 15, welche in beiden Figuren 3 und 4 an einer eingeschweissten Profilstange 14 ausgebildet sind. Die Profilstange 14 erhöht zum einen die Stabilität eines Tragelementes 2, 102, zum anderen lässt sich so die Fertigungsgenauigkeit bezüglich der Positionen und Abstände der Auflagestellen 15 erhöhen. Am unteren Ende sind kreisrunde Ausschnitte 17 vorhanden. Diese dienen dazu, mehrere Tragelemente 2, 102 mittels Distanzelementen 4 und Abstützelementen 5, in Figur 3 und 4 nicht gezeigt, zu verbinden. Das Tragelement 2 in Figur 3 weist am unteren Ende zudem einen Vorsatz 18 mit einer ebenen Fläche 19 auf, auf welchem zum Beispiel ein Schaltschrank 20 siehe Figuren 5 bis 7 abgestützt werden kann. An einem Gestell 1 sind vorzugsweise jeweils mindestens zwei Tragelemente 2 mit einem Vorsatz 18 ausgestaltet. An den zusätzlich angebauten Tragelementen 102 ist der Vorsatz 18 in der Regel nicht vorhanden siehe Figur 4 und demnach sind auch nur zwei kreisrunde Ausschnitte 17 pro Tragelement 102 vorgesehen.

Durch eine Anpassung der Dimensionen der Tragelemente 2, 102 in den zwei Richtungen der Hauptebene kann die Breite und die Höhe des für den Betrieb aufgestellten Gestells 1 flexibel an die Breite der Förderbandanlage sowie deren Installationshöhe, angepasst werden. Für ein breiteres Förderband 10 wird die Distanz zwischen den Auflagestellen 15 der ersten mechanischen Schnittstellenelemente 6 in Richtung quer zur Längsrichtung L der Förderbandanlage, und für eine höherliegende Förderbandanlage die Distanz zwischen dem unteren Ende des Tragelementes 2, 102 und den Auflageflächen 3 vergrössert. Mit einer Anpassung der Länge der Distanzelemente 4 kann zudem die Länge des Gestells 1 flexibel an die Länge der Förderbandanlage angepasst werden.

Um alle Einbauanforderungen zu erfüllen, sind am erfinderischen Gestell 1 lediglich das Distanzelement 4 und das Tragelement 2, 102 mit den entsprechend richtigen Dimensionen zu wählen. Durch diese Modularität ergibt sich für den Hersteller des Gestells 1 eine vereinfachte Produktion sowie Lagerhaltung und führt zu niedrigeren Herstellungskosten.

Die Figur 5 zeigt eine mögliche Verwendung des Gestells 1 für eine Förderbandanlage mit einer Kontrollwaage 12. Diese ist dabei auf einem Verbindungselement 9 abgestützt, das wiederum auf den Auflageflächen 3 der zwei Tragelemente 2 aufliegt. Zwei Förderbänder 10 sind einmal als Zuführband und einmal als Abführband nahe den Enden des Wägebandes der Kontrollwaage 12 angeordnet. Durch die Ausgestaltung der ersten mechanischen Schnittstellen 6, der zweiten mechanischen Schnittstellen 8 und des Verbindungselementes 9 als Rundprofil in Längsrichtung L ist eine Verschiebbarkeit bzw. Verstellbarkeit der am Gestell 1 angebrachten Komponenten der Förderbandanlage relativ zum Gestell 1 gewährleistet. Ein Schaltschrank 20 ist über die oben erwähnten Vorsätze 18 auf den Tragelementen 2 aufgestützt. Durch diese Montage des Schaltschrankes 29 am Gestell 1 bleibt die Rückwand des Schaltschrankes 20 in ihrer vollen Grösse zugänglich. Dies erleichtert dem Hersteller einer Kontrollwaage 12 den zugehörigen Schaltschrank 20 bei Störungsbehebungen besser an die darin verbauten elektrischen Bauteile zu gelangen.

In Figur 6 ist eine Vorderansicht einer weiteren Ausführungsform der Förderanlage mit Kontrollwaage 12 aus Sicht eines Bedieners gezeigt. Durch gestrichelte Linien ist ein separates Kontrollwaagengestell 13 unterhalb der Kontrollwaage 12 angedeutet. Diese Variante der Befestigung und Abstützung einer Kontrollwaage 12 getrennt vom Gestell 1 bringt den Vorteil, dass Vibrationen und/oder Schwingungen nicht bis zur Wägezelle der Kontrollwaage 12 ausbreiten und so die Wägeleistung der Kontrollwaage 12 hinsichtlich Genauigkeit und Reproduzierbarkeit mindern. Die Kontrollwaage ist somit völlig isoliert auf dem Boden abgestützt ohne Berührungspunkte mit dem Gestell 1 der Förderanlagen und deren Komponenten, da das Kontrollwaagengestell 13 nicht in Verbindung zum Gestell für die Förderbandanlage angeordnet ist.

An der rechten Seite in Figur 6 ist die Förderbandanlage, wie sie beispielsweise in Figur 5 gezeigt ist, durch ein weiteres Förderband 10' verlängert worden. Dazu wurde das ursprüngliche Gestell 1 durch ein zusätzliches Tragelement 102 ergänzt, sowie über ein Distanzelement 4 mit dem Grundmodul des Gestells 1 verbunden, wobei das Abstützelement 5 und der Maschinenfuss 21 vom rechten Tragelement 2 des Grundmoduls an das zusätzliche Tragelement 102 verschoben wurden. Die ersten mechanischen Schnittstellenelemente 6 und die zweiten mechanischen Schnittstellenelemente 8 wurden bis über die Auflagestellen 5 des Auflagebereiches 3 des Tragelementes 102 verlängert und durch ein Fixierelement 7 fixiert.

In Figur 6 auf der linken Seite wurde die Förderbandanlage ebenfalls verlängert. Jedoch ist hier das ursprüngliche als Zuführband der Kontrollwaage 12 verwendete Förderband durch ein längeres Förderband 10" ersetzt worden, welches nun die Aufgabe der Zuführung der Gegenstände auf die Kontrollwaage 12 übernimmt. Die Risslinie soll darstellen, dass das Förderband 10" beliebig lang sein könnte und so auch das Gestell 101 bis zu einem geeigneten Abstützpunkt verlängert werden kann. Auch hier ist ein Tragelement 102 über ein Distanzelement 4' mit dem Grundmodul des Gestells 1 verbunden und entsprechend die ersten mechanischen Schnittstellenelemente 6 und die zweiten mechanischen Schnittstellenelemente 8 bis über die Auflagestellen 15 des Auflagebereiches 3 des Tragelementes 102 verlängert werden, sowie das Abstützelement 5 und der Maschinenfuss 21 vom linken Tragelement 2 des Grundmoduls an das zusätzliche Tragelement 102 verschoben.

Bei den beiden oben beschriebenen Verlängerungen der Förderbandanlage wurden jeweils die Abstützelemente 5 und die Maschinenfüsse 21 vom ihrem jeweiligen Tragelement 2 des Grundmoduls an das zusätzliche Tragelement 102 verschoben. Das Gestell 101 erhält somit eine grössere Standfläche und einen Freiraum unterhalb der Kontrollwaage 12. Es ist aber auch möglich die Abstützelemente 5 und die Maschinenfüsse 21 an ihrem jeweiligen Tragelement 2 des Grundmoduls zu belassen, womit der Freiraum unterhalb der verlängerten Förderbandanlage entstünde. Da das Distanzelement 4 von beiden Seiten an das Abstützelement 5 anbringbar ist, ist es ebenso möglich die Abstützelemente 5 und die Maschinenfüsse 21 an ihrem jeweiligen Tragelement 2 des Grundmoduls zu belassen und neue Abstützelemente 5 und die Maschinenfüsse 21 an die zusätzlichen Tragelemente 102 anzubringen, womit sich das Gestell 101 schlussendlich über mehr Maschinenfüsse 21 auf dem Untergrund abstützt als vor der Verlängerung der Förderbandanlage.

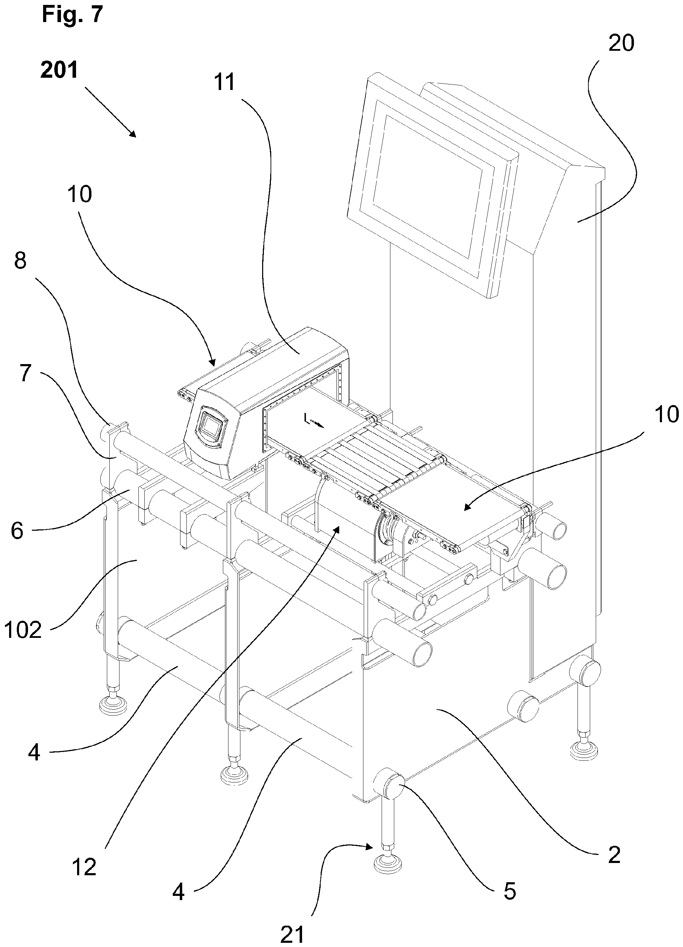

Figur 7 zeigt eine Förderbandanlage mit einem Metalldetektionssystem 11 und eine in Längsrichtung L folgende Kontrollwaage 12 in isometrischer Darstellung. Die Kontrollwaage 12, welche die Gegenstände auf der Förderbandanlage verwiegt, und das Metalldetektionssystem 11, welches die Gegenstände auf
Produktverunreinigungen untersucht, sind in derselben Produktionslinie verwendet. Häufig liegt es nahe mehrere Inspektionssysteme gleich nacheinander in derselben Produktionslinie anzuordnen, um eine üblich nachfolgende Aussortiervorrichtung, welche fehlerhafte Produkte ausscheidet, gemeinsam zu nutzen. Durch die Verlängerbarkeit des Gestells 1 kann, wie in Figur 7 dargestellt, ein Metalldetektionssystem 11 der Kontrollwaage 12 vorgeschaltet werden. In diesem Fall führt das Zuführband der Kontrollwaage 12 die Gegenstände in Laufrichtung L zuerst durch das Metalldetektionssystem 11 hindurch und anschliessend auf das Wägeband der Kontrollwaage 12. Ebenso möglich wären die Anordnung des Metalldetektionssystems 11 nach der Kontrollwaage 12, sowie der Austausch Beider durch ein anderes Inspektionssystem.
Nachfolgend an das Metalldetektionssystem 12 und die Kontrollwaage 12 ist es üblich eine Aussortiervorrichtung anzubringen, welche dann die fehlerhaften Produkte ausscheidet.

### Bezugszeichenliste

- 1, 101, 201: Gestell
- 2, 102: Tragelement
- 3: Auflagebereich
- 4, 4': Distanzelement
- 5: Abstützelement
- 6: erstes mechanisches Schnittstellenelement
- 7: Fixierelement
- 8: zweites mechanisches Schnittstellenelement
- 9: Verbindungselement
- 10, 10', 10": Förderband
- 11: Metalldetektionssystem
- 12: Kontrollwaage
- 13: Kontrollwaagengestell
- 14: Profilstange
- 15: Auflagestellen
- 16: Biegelaschen
- 17: Ausschnitte
- 18: Vorsatz
- 19: Ebene Fläche
- 20: Schaltschrank
- 21: Maschinenfuss

- L: Längsrichtung

## Patentansprüche

1. Gestell (1, 101, 201) für eine Förderbandanlage, welche ein in einer Längsrichtung (L) umlaufendes Förderband aufweist, zum Abstützen einer für den Betrieb aufgestellten Förderbandanlage auf dem Untergrund, aufweisend,
- mindestens zwei Tragelemente (2, 102) aus einem Plattenmaterial, deren Hauptebenen sich quer zur Längsrichtung (L) erstrecken, wobei ein Tragelement (2, 102) einen am oberen Ende angeordneten Auflagebereich (3) aufweist,
- mindestens zwei Distanzelemente (4), welche jeweils parallel zur Längsrichtung (L) angeordnet sind und dabei einen Abstand der mindestens zwei Tragelemente (2,102) bestimmen,
- mindestens ein Abstützelement (5) mit mindestens einem dem Untergrund zugewandten Maschinenfuss (21), über welchen sich das Gestell (1, 101, 201) auf dem Untergrund abstützt, wobei das mindestens eine Abstützelement (5) mit einem Distanzelement verbunden ist,
- mindestens zwei erste mechanische Schnittstellenelemente (6), welche parallel zu den Distanzelementen (4) verlaufen, sich vorzugsweise über mindestens zwei Tragelemente (2, 102) erstrecken und dabei auf den Auflagebereichen (3) der mindestens zwei Tragelemente (2, 102) aufliegend fixiert sind, wobei der Auflagebereich (3) weitgehend horizontal ausgerichtet ist,
- mindestens zwei Fixierelemente (7), mittels welcher die ersten mechanischen Schnittstellenelemente (6) an den Auflagebereichen (3) fixierbar sind
**dadurch gekennzeichnet, dass**
die mindestens zwei Distanzelemente (4) jeweils zwischen den mindestens zwei Tragelementen (2, 102) angeordnet sind, und dass das Gestell (1, 101, 102) derart ausgestaltet ist, dass die Dimensionen in den zwei Richtungen der Hauptebenen der mindestens zwei Tragelemente (2, 102) die Breite und die Installationshöhe des Gestells (1, 101, 201) bestimmen, so dass durch Anpassung der Dimensionen der Tragelemente (2, 102) in Richtungen der Hauptebene die Breite und Höhe des Gestells (1, 101, 201) flexibel an die Breite der Förderbandanlage sowie deren Installationshöhe anpassbar ist.

2. Gestell nach Anspruch 1 **dadurch gekennzeichnet, dass**
mittels weiterer Tragelemente (2, 102), Distanzelemente (4) und Fixierelemente (7) das Gestell (1, 101, 201) in und gegen seine Längsrichtung (L) verlängerbar ist, wobei die ersten mechanischen Schnittstellenelemente (6) über die Auflagestellen (15) des Auflagebereiches (3) der Tragelemente (2, 102) verlängerbar sind.

3. Gestell nach Anspruch 1 oder 2 **dadurch gekennzeichnet, dass**
mindestens zwei Tragelemente (2) im unteren Bereich einen Vorsatz (18) mit einer ebenen Fläche (19) aufweisen auf welchem ein Schaltschrank (20) abstützbar ist.

4. Gestell nach Anspruch 2 oder 3 **dadurch gekennzeichnet, dass**
durch Verwendung von unterschiedlich langen Distanzelementen (4) zwischen jeweils zwei Tragelementen (2, 102) der Abstand von Tragelement (2, 102) zu Tragelement (2, 102) flexibel an die für das Gestell (1, 101, 201) geltenden Einbaubedingungen anpassbar ist.

5. Gestell nach einem der Ansprüche 1 bis 4 **dadurch gekennzeichnet, dass**
die mindestens zwei ersten mechanischen Schnittstellenelemente (6) unterbrechungsfrei über die gesamte Länge des Gestells (1, 101, 201) verlaufen.

6. Gestell nach einem der Ansprüche 1 bis 5 **dadurch gekennzeichnet, dass** das
Gestell (1, 101, 201) zusätzlich mindestens ein zweites mechanisches Schnittstellenelement (8) aufweist, welches parallel zu den ersten mechanischen Schnittstellenelementen (6) verläuft und vom Auflagebereich (3) der Tragelemente (2, 102) nach oben beabstandet angeordnet ist.

7. Gestell nach Anspruch 6 **dadurch gekennzeichnet, dass**
die Fixierelemente (7), nebst den ersten mechanischen Schnittstellenelementen (6) an die Auflagebereiche (3) der Tragelemente (2, 102), zusätzlich die zweiten mechanischen Schnittstellenelemente (8) in einem Abstand zum Auflagebereich (3) der Tragelemente (2, 102) fixieren.

8. Gestell nach einem der Ansprüche 6 oder 7 **dadurch gekennzeichnet, dass** das zweite mechanische Schnittstellenelement (8) unterbrechungsfrei über die gesamte Länge des Gestells (1, 101, 201) verläuft.

9. Gestell nach einem der Ansprüche 1 bis 7 **dadurch gekennzeichnet, dass** die mindestens zwei ersten mechanischen Schnittstellenelemente (6) und das mindestens eine zweite mechanische Schnittstellenelement (8) als Rundprofile ausgestaltet sind.

10. Gestell nach einem der Ansprüche 1 bis 9 **dadurch gekennzeichnet, dass** an den mindestens zwei ersten mechanischen Schnittstellenelementen (6) eine Förderbandanlage und/oder ein Metalldetektionssystem (11) zur Erkennung von Metallverunreinigungen in einem auf der Förderbandanlage geförderten Produktes und/oder eine Kontrollwaage (12) zum Verwiegen eines auf der Förderbandanlage geförderten Produktes und/oder ein optisches Inspektionssystem zur Erkennung eines fehlerhaften Erscheinungsbild eines auf dem Förderband geförderten Produktes anbringbar sind/ist.

11. Gestell nach einem der Ansprüche 1 bis 10 **dadurch gekennzeichnet, dass** das Gestell (1) zusätzlich ein Verbindungselement (9) aufweist, welches auf den Auflageflächen (3) zweier Tragelemente (2, 102) fixiert aufliegt und die zwei Tragelemente (2, 102) so verbindet, dass eine Kontrollwaage (12) daran befestigt werden kann.

12. Gestell nach einem der Ansprüche 1 bis 10 **dadurch gekennzeichnet, dass** im Freiraum zwischen den Tragelementen (2, 102) ein, mit dem Gestell (1, 101, 201) nicht in Verbindung stehendes weiteres Gestell (13) für eine Kontrollwaage (12) anordnbar ist.

13. Gestell nach einem der Ansprüche 1 bis 12 **dadurch gekennzeichnet, dass** der Auflagebereich (3) des Tragelementes (2, 102) durch eine mit dem Plattenmaterial verbundene Profilstange (14) ausgebildet ist.

14. Förderbandanlage mit einer Kontrollwaage (12) zum Verwiegen eines auf der Förderbandanlage geförderten Produktes und/oder mit einem Metalldetektionssystem (11) zur Erkennung von Metallverunreinigungen in einem auf der Förderbandanlage geförderten Produktes und/oder mit einem optischen Inspektionssystem zur Erkennung eines fehlerhaften Erscheinungsbild eines auf dem Förderband geförderten Produkt **dadurch gekennzeichnet, dass**
die Förderbandanlage und/oder die Kontrollwaage (12) und/oder das Metalldetektionssystem (11) auf einem Gestell (1, 101, 201) nach einem der Ansprüche 1 bis 13 auf dem Untergrund abgestützt ist.

## Claims

1. A frame (1, 101, 201) for a conveyor belt system, which comprises a conveyor belt circulating in a longitudinal direction (L), for supporting a conveyor belt system on the ground assembled for operation, comprising
- at least two carrier elements (2, 102) made of a plate-like material, the principal planes whereof extend at right angles to the longitudinal direction (L), wherein one carrier element (2, 102) comprises a seating area (3) disposed at the upper end,
- at least two distance elements (4), which are each disposed parallel to the longitudinal direction (L), determine a spacing of the at least two carrier elements (2, 102),
- at least one support element (5) to at least one machine foot (21) facing the ground, via which machine foot the frame (1, 101, 201) is supported on the ground, wherein the at least one support element (5) is connected with a distance element (4),
- at least two first mechanical interface elements (6), which run parallel to the distance elements (4), preferably extend over at least two carrier elements (2, 102) and are fixed lying on the seating areas (3) of the at least two carrier elements (2, 102), wherein the seating area (3) is largely aligned horizontally,
- at least two fixing elements (7), by means of which the first mechanical interface elements (6) can be fixed to the seating areas (3).
**characterised in that**
each of the at least two distance elements (4) is arranged between the at least two carrier elements (2, 102), and
**in that** the frame (1, 101, 201) is designed such that the dimensions in the two directions of the principal planes of the at least two carrier elements (2, 102) determine the width and installation height of the frame (1, 101, 201) **in that** the width and height of the frame (1, 101, 201) can be adapted flexibly to the width of the conveyor belt system and its installation height by adapting the dimensions of the carrier elements (2,102) in the directions of the principal plane.

2. The frame according to claim 1, **characterised in that**
the frame (1, 101, 201) can be extended in and against its longitudinal direction (L) by means of further carrier elements (2, 102), distance elements (4) and fixing elements (7),
wherein the first mechanical interface elements (6) are extendable beyond the seating points (15) of the seating area (3) of the carrier element (2, 102).

3. The frame according to claim 1 or 2, **characterised in that**
at least two carrier elements (2) comprise in the lower region an attachment (18) with a flat surface (19), on which a control cabinet (20) can be supported.

4. The frame according to claim 2 or 3, **characterised in that**,
the spacing of carrier element (2,102) with respect to carrier element (2,102) can be adapted flexibly to the installation conditions prevailing for the frame (1, 101, 201) by using distance elements (4) of differing length between two carrier elements (2,102) in each case.

5. The frame according to any one of the claims 1 to 4, **characterised in that**
the at least two first mechanical interface elements (6) run without interruption over the entire length of the frame (1, 101, 201).

6. The frame according to any one of the claims 1 to 5, **characterised in that**
the frame (1, 101, 201) additionally comprises at least one second mechanical interface element (8), which runs parallel to the first mechanical interface elements (6) and is disposed above spaced apart from the seating area (3) of the carrier elements (2, 102).

7. The frame according to claim 6, **characterised in that**
the fixing elements (7) fix, apart from the first mechanical interface elements (6) to the seating areas (3) of the carrier elements (2, 102), also the second mechanical interface elements (8) at a distance from the seating area (3) of the carrier elements (2, 102).

8. The frame according to any one of claims 6 or 7, **characterised in that**
the second mechanical interface element (8) runs without interruption over the entire length of the frame (1, 101, 201).

9. The frame according to any one of claims 1 to 7, **characterised in that**
the at least two first mechanical interface elements (6) and the at least one second mechanical interface element (8) are configured as round profiles.

10. The frame according to any one of claims 1 to 9, **characterised in that**
a conveyor belt system and/or a metal detection system (11) for detecting metal impurities in a product conveyed on the conveyor belt system and/or a checkweigher (12) for weighing a product conveyed on the conveyor belt system and/or an optical inspection system for detecting a defective appearance of a product conveyed on the conveyor belt can be provided on the at least two first mechanical interface elements (6).

11. The frame according to any one of claims 1 to 10, **characterised in that**
the frame (1) additionally comprises a connection element (9), which lies fixedly on the seating areas (3) of two carrier elements (2, 102) and connects the two carrier elements (2, 102) in such a way that a checkweigher (12) can be fixed thereto.

12. The frame according to any one of claims 1 to 10, **characterised in that**
a further frame (13) for a checkweigher (12) not connected to the frame (1, 101, 201) can be disposed in the free space between the carrier elements (2, 102).

13. The frame according to any one of claims 1 to 12, **characterised in that**
the seating area (3) of the carrier element (2, 102) is constituted by a profile rod (14) connected to the plate-like material.

14. A conveyor belt system with a checkweigher (12) for weighing a product conveyed on the conveyor belt system and/or with a metal detection system (11) for detecting metal impurities in a product conveyed on the conveyor belt system and/or with an optical inspection system for detecting a defective appearance of a product conveyed on the conveyor belt,
**characterized in that**
the conveyor belt system and/or the checkweigher (12) and/or the metal detection system (11) is supported on a frame (1, 101, 201) according to any one of claims 1 to 13 on the ground.

## Revendications

1. Structure (1, 101, 201) destinée à une installation de convoyeur, laquelle comporte un convoyeur continu dans une direction longitudinale (L), pour l'appui d'une installation de convoyeur montée pour la mise en service au sol, comportant
- au moins deux éléments de support (2, 102) constitués d'n matériau en plaque, dont les plans principaux s'étendent perpendiculairement à la direction longitudinale (L), dans laquelle un élément de support (2, 102) présente une région de support (3) disposée à l'extrémité supérieure,
- au moins deux éléments d'écartement (4) disposés respectivement parallèlement à la direction longitudinale (L) et déterminant ainsi un écart entre les au moins deux éléments de support (2, 102),
- au moins un élément d'appui (5) avec au moins un pied de machine (21) tourné vers le sol, par lequel la structure (1, 101, 201) s'appuie au sol, l'au moins un élément d'appui (5) étant relié à un élément d'écartement,
- au moins deux premiers éléments d'interface mécaniques (6) s'étendant parallèlement aux éléments d'écartement (4), de préférence sur au moins deux éléments de support (2, 102), tout en étant fixés en appui sur les régions de support (3) des au moins deux éléments de support (2, 102), la région de support (3) étant orientée généralement horizontalement,
**caractérisée en ce que**
les au moins deux éléments d'écartement (4) sont respectivement disposés entre les au moins deux éléments de support (2, 102), et
**en ce que** la structure (1, 101, 201) est conçue de telle façon que les dimensions dans les deux directions des plans principaux des au moins deux éléments de support (2, 102) déterminent la largeur et la hauteur d'installation de la structure (1, 101, 201), de sorte que l'adaptation des dimensions des éléments de support (2, 102) dans des directions du plan principal permet d'adapter de manière flexible la largeur et la hauteur de la structure (1, 101, 201) par rapport à la largeur de l'installation de convoyeur et à la hauteur d'installation de celle-ci.

2. Structure selon la revendication 1, **caractérisée en ce que**
d'autres éléments de support (2, 102), éléments d'écartement (4) et éléments de fixation (7) permettent d'allonger la structure (1, 101, 201) dans sa direction longitudinale (L) et contre celle-ci, les premiers éléments d'interface mécaniques (6) pouvant être allongés par le biais des points de support (15) de la région de support (3) des éléments de support (2, 102).

3. Structure selon la revendication 1 ou 2, **caractérisée en ce qu'**au
moins deux éléments de support (2) présentent une saillie (18) avec une surface plane (19), sur laquelle peut s'appuyer une armoire électrique (20).

4. Structure selon la revendication 2 ou 3, **caractérisée en ce que**
l'utilisation d'éléments d'écartement (4) de différentes longueurs respectivement entre eux éléments de support (2, 102) permet d'adapter l'écart entre un élément de support (2, 102) et un autre élément de support (2, 102) de manière flexible par rapport aux conditions d'installation valables pour la structure (1, 101, 201).

5. Structure selon l'une des revendications 1 à 4, **caractérisée en ce que**
les au moins deux premiers éléments d'interface mécaniques (6) s'étendent en continu sur toute la longueur de la structure (1, 101, 201).

6. Structure selon l'une des revendications 1 à 5, **caractérisée en ce que**
la structure (1, 101, 201) comporte en outre au moins un deuxième élément d'interface mécanique (8), lequel s'étend parallèlement aux premiers éléments d'interface mécaniques (6), tout en étant disposé plus en hauteur par rapport à la région de support (3) des éléments de support (2, 102).

7. Structure selon la revendication 6, **caractérisée en ce que**
les éléments de fixation (7), en plus de fixer les premiers éléments d'interface mécaniques (6) aux régions de support (3) des éléments de support (2, 102), fixent en outre les deuxièmes éléments d'interface mécaniques (8) à distance de la région de support (3) des éléments de support (2, 102).

8. Structure selon l'une des revendications 6 ou 7, **caractérisée en ce que**
le deuxième élément d'interface mécanique (8) s'étend en continu sur toute la longueur de la structure (1, 101, 201).

9. Structure selon l'une des revendications 1 à 7, **caractérisée en ce que** les au moins deux premiers éléments d'interface mécaniques (6) et l'au moins un deuxième élément d'interface mécanique (8) sont conçus comme des profilés ronds.

10. Structure selon l'une des revendications 1 à 9, **caractérisée en ce qu'**une
installation de convoyeur et/ou un système de détection de métaux (11) servant à détecter des impuretés métalliques dans un produit transporté sur l'installation de convoyeur et/ou une balance de contrôle (12) servant à peser un produit transporté sur l'installation de convoyeur et/ou un système d'inspection optique servant à détecter un aspect défectueux d'un produit transporté sur l'installation de convoyeur peut/peuvent être fixé(s) sur les au moins deux premiers éléments d'interface mécaniques (6).

11. Structure selon l'une des revendications 1 à 10, **caractérisée en ce que**
la structure (1, 101, 201) comporte en outre un élément de liaison (9) fixé en appui sur les surfaces de support (3) de deux éléments de support (2, 102) et reliant les deux éléments de support (2, 102) de telle façon qu'un chariot de contrôle (12) peut y être fixé.

12. Structure selon l'une des revendications 1 à 10, **caractérisée en ce qu'**une
autre structure (13) non reliée à la structure (1, 101, 201) peut être disposée dans l'espace libre entre les éléments de support (2, 102) pour une balance de contrôle (12).

13. Structure selon l'une des revendications 1 à 12, **caractérisée en ce que**
la région de support (3) de l'élément de support (2, 102) est formée par une barre profilée (14) reliée au matériau en plaque.

14. Installation de convoyeur avec une balance de contrôle (12) servant à peser un produit transporté sur l'installation de convoyeur et/ou avec un système de détection de métaux (11) servant à détecter des impuretés métalliques dans un produit transporté sur l'installation de convoyeur et/ou un système d'inspection optique servant à détecter un aspect défectueux d'un produit transporté sur l'installation de convoyeur,
**caractérisée en ce que**
l'installation de convoyeur et/ou la balance de contrôle (12) et/ou le système de détection de métaux (11) sont supportés au sol sur une structure (1, 101, 201) selon l'une des revendications 1 à 13.
